(19) Europäisches Patentamt
European Patent Office
Office européen des brevets

(11) Publication number: 0 070 168
B1

(12) EUROPEAN PATENT SPECIFICATION

(45) Date of publication of patent specification: 10.04.85

(51) Int. Cl.$^4$: **C 09 J 3/00,** C 09 J 7/02, C 23 F 15/00, F 16 L 58/00

(21) Application number: 82303616.5

(22) Date of filing: 09.07.82

(54) **Protecting metal substrates from corrosion.**

(30) Priority: 13.07.81 US 282354

(43) Date of publication of application: 19.01.83 Bulletin 83/03

(45) Publication of the grant of the patent: 10.04.85 Bulletin 85/15

(84) Designated Contracting States: AT BE CH DE FR IT LI NL SE

(58) References cited:
FR-A-2 213 934
GB-A-2 023 021
GB-A-2 028 810

(73) Proprietor: RAYCHEM CORPORATION
300 Constitution Drive
Menlo Park California 94025 (US)

(72) Inventor: Pieslak, George
460 Ninth Avenue
Menlo Park California 94025 (US)
Inventor: Fritchle, Elena Clare
1779 Woodland Avenue, Apt.36
Palo Alto California 94303 (US)

(74) Representative: Dlugosz, Anthony Charles et al
Raychem Limited Intellectual Property Law
Department Faraday Road
Dorcan Swindon Wiltshire (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 070 168 B1

**Description**

This invention relates to adhesive compositions having improved properties, in particular improved resistance to cathodic disbonding and to the use of such adhesives in bonding protective coatings to substrates.

To protect steel, or other metal, pipes and pipelines from corrosion, a protective coating is generally applied. The protective coating can be, for example, a polymeric sheet, tape or sleeve of, for example polyethylene, bonded to the surface of the pipe. Various adhesives and mastics can be used to bond the coating to the pipe. However, accidental damage to the protective coating can occur during installation and use of the pipe or pipeline exposing some of the surface of the pipe to the environment.

Corrosion of a steel or iron pipe when exposed to the environment is due to electrochemical reactions in which the pipe loses iron ions to water in the environment coating localized anodic regions on the pipe. To prevent the development of these anodic regions and thus the attendant corrosion of the pipe, an electric current can be impressed along the length of the pipe. The pipe is connected to a negative electrical potential, thus causing the pipe to act as a cathode. Further loss of iron ions to the environment is inhibited.

It is known that adhesive compositions generally used to bond a protective coating to a pipe are adversely affected by this imposed electrical current. The result of this is a weakening of the adhesive bond between the coating and the pipe such that the coating comes away from the pipe. More of the surface of the pipe is then exposed to the corrosive conditions of the environment. This phenomenon is referred to in the art as "cathodic disbonding".

According to one aspect of this invention there is provided a dimensionally recoverable article having, on at least part of a surface thereof, an adhesive composition comprising an anhesive component and an effective amount of an agent for reducing cathodic disbonding which comprises a hydrazine derivative of the general formula I.

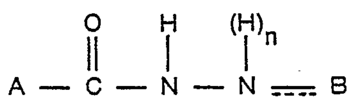

I

Wherein

n is 0 or 1;

A represents a straight-chain or branched alkyl radical, an aryl, aralkyl, or hydrazido radical or a radical of the general formula II.

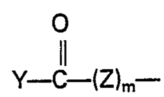

II

in which

m is 0 or an integer of up to 20;

Y represents a straight-chain or branched alkyl group, an aryl or heterocyclic group; and

Z represents a straight-chain or branched alkyl group, an aryl or heterocyclic group;

any of the radicals A being unsubstituted or substituted by one or more lower alkyl or hydroxyl groups or halogen atoms; and

When n is 1, B represents a straight-chain or branched alkyl radical, an aryl or aralkyl radical or a radical of the general formula II as defined above; and

When n is 0, B represents a radical of the general formula III

$$=CH—(CH_2)_q—W \qquad III$$

wherein q is 0 or an integer of from 1 to 20, and W represents a straight-chain or branched alkyl group, or an aryl or heterocyclic group, each of which may be unsubstituted or substituted by one or more lower alkyl or hydroxyl groups or halogen atoms.

The term "lower" used herein to refer to alkyl groups and other groups e.g. alkoxy groups is defined as meaning groups having up to 6 carbon atoms, preferably up to 4 carbon atoms.

According to another aspect, the invention provides a substrate, preferably a metal substrate and especially a pipe having a polymeric coating bonded to at least part of the surface thereof with an adhesive composition comprising an adhesive component and from 0.01 to 30% by weight, based on the total weight of the adhesive composition of a hydrazine derivative of the general formula I.

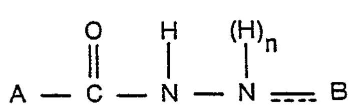

I

Wherein

n is 0 or 1;

A represents a straight-chain or a branched alkyl radical, an aryl, aralkyl, or hydrazido radical or a radical of the general formula II.

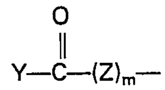

II

in which

m is 0 or an integer of up to 20;

Y represents a straight-chain or branched alkyl group, an aryl or heterocyclic group; and

Z represents a straight-chain or branched alkyl group, an aryl or heterocyclic group;

any of the radicals A being unbsubstituted or substituted by one or more lower alkyl or hydroxyl groups or halogen atoms; and

When n is 1, B represents a straight-chain or a branched alkyl radical, an aryl or aralkyl radical or a radical of the general formula II as defined above; and

When n is 0, B represents a radical of the general formula III

$$=CH—(CH_2)_q—W \qquad III$$

wherein q is 0 or an integer of from 1 to 20, and W represents a straight-chain or a branched alkyl group, or an aryl or heterocyclic group, each of which may be unsubstituted or substituted by one or more lower alkyl or hydroxyl groups or halogen atoms.

According to yet another aspect, the invention provides a method of protecting a metal substrate from corrosion which comprises bonding a protective coating to the substrate with an adhesive composition comprising an adhesive component and an effective amount of an agent for reducing cathodic disbonding which comprises a hydrazine derivative of the general formula I.

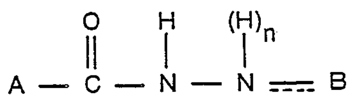

I

Wherein

n is 0 or 1;

A represents a straight-chain or a branched alkyl radical, an aryl, aralkyl, or hydrazido radical or a radical of the general formula II.

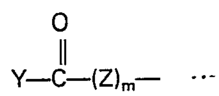

II

in which

m is 0 or an integer of up to 20;

Y represents a straight-chain or a branched alkyl group, an aryl or heterocyclic group; and

Z represents a straight-chain or a branched alkyl group, an aryl or heterocyclic group;

any of the radicals A being unsubstituted or substituted by one or more lower alkyl or hydroxyl groups or halogen atoms; and

When n is 1, B represents a straight-chain or branched alkyl radical, an aryl or aralkyl radical or a radical of the general formula II as defined above; and

When n is 0, B represents a radical of the general formula III

$$=CH—(CH_2)_q—W \qquad III$$

wherein q is 0 or an integer of from 1 to 20, and W represents a straight-chain or branched alkyl group, or an aryl or heterocyclic group, each of which may be unsubstituted or substituted by one or more lower alkyl or hydroxyl groups or halogen atoms and applying a negative electrical potential to the substrate thereby causing an electric current to flow through the substrate.

The dimensionally recoverable article according to the invention is preferably dimensionally heat-recoverable and can be, for example, a sheet, tape or sleeve coated on at least a portion of one surface thereof with an adhesive composition, as defined more fully below.

When in the form of a sheet or tape, the article is generally coated with the adhesive composition over one entire surface thereof. The sheet or tape is placed on the substrate to be protected with the adhesive coated surface placed in contact with the substrate. The sheet or tape is preferably heat-shrinkable and is wrapped around the pipe and heat is applied to cause the sheet or tape to shrink into intimate contact with the pipe. The adhesive is preferably a hot melt adhesive and the application of heat activates the adhesive and produces a bond between the article to the substrate. The substrate can be any metal substrate sought to be protected from corrosion but in general the heat-recoverable article of this invention is used to protect iron or steel pipe.

When the heat-recoverable article is heat-shrinkable and in the form of a sleeve, it is coated with adhesive on the interior surface thereof. The sleeve can be a continuous tubular member or a sheet

adapted to form a tube when wrapped around a substrate. The sleeve is positioned around the pipe and heated to shrink the sleeve onto the pipe and melt or activate the adhesive to bond the sleeve to the pipe. Heat-recoverable sleeves of this type are well known in the art. For example, polymeric tubes are described in U.S. Patents Nos. 2,027,962 to Currie, and 3,086,242 to Cook et al. and wraparound sleeves are described in U.S. Patent No. 3,455,336 to Ellis. Coating of the sleeve or sheet with the adhesive compositions can be accomplished by well known coating techniques.

The protective coating or covering applied to the metal susbtrate can be a heat-recoverable article as above or a sheet, tape or tube of non-heat-recoverable material. The protective coating is preferably a polyolefin such as polyethylene or polypropylene. Other polymers such as polyvinyl chloride and polymeric blends can also be used. Particularly preferred is cross-linked polyethylene.

In some embodiments of the invention the adhesive composition is applied to the metal substrate prior to applying the protective coating.

To protect a metal substrate from corrosion further, an electrical current can be impressed through the substrate. The metal substrate is connected to a negative electrical potential causing the substrate to become a cathode in the electrical system. Such a system for corrosion inhibition generally includes a sacrificial anode. The cathode characteristics of the substrate inhibit loss of metal ions from the substrate and thus reduce corrosion.

As stated above, the adhesive composition used to adhere the protective coating to the substrate comprises an adhesive component and the hydrazine derivative. The adhesive component can be any adhesive typically used to bond corrosion protection coatings to metal pipes or other substrates, and particularly those generally used to bond a coating to a pipeline which will carry an impressed current to protect the pipeline from corrosion. Such adhesives include hot melt adhesives such as those based on thermoplastic polyamides, polyolefins, polyesters, polyurethanes, polysulfides and the like. Particularly preferred are hot melt adhesives containing ethylene homo- and copolymers, for example copolymers of ethylene with vinyl acetate, maleic anhydride, acrylic acid, methacrylic acid or an alkyl acrylate such as ethyl acrylate and blends thereof. Mastics can also be used, for example low molecular weight polyisobutylene based mastic compositions.

The adhesive composition can contain the other additives such as tackifiers, fillers, waxes, rubbers, stabilizers and the like. Tackifiers that are used include phenolformaldehyde resins, hydrocarbon resins, vinyl toluene-alpha-methyl styrene copolymers, polyterpenes, phenolterpene resins, dibasic acid modified esters, polymerized rosin esters, modified rosin esters, aromatic hydrocarbon resins and coumarone and coumarone-indene resins. Other tackifiers that can be included are well known. Fillers that can be used include pigments and reinforcing agents such as carbon black.

Waxes which are usually added to hot melt adhesives are crystalline waxes, such as lower molecular weight polyethylene, oxidized polyethylene waxes, ethylene-vinyl acetate copolymer wax, ethylene-acrylic acid copolymer wax, ethylene-maleic anhydride copolymer wax, atactic polypropylene, and the like. High temperature properties may be improved by incorporation of high, low or medium density polyethylene, linear low density polyethylene or high temperature waxes. Rubbers which can be used are natural and synthetic rubbers, particularly ethylene-propylene rubbers, ethylene-propylenediene rubbers, butyl rubbers and thermoplastic elastomers such as those based on styrene-butadiene-styrene or styreneisoprene-styrene linear or radical block copolymers. Stabilizers which can be used include antioxidants, such as phenolic antioxidants, hindered amine antioxidants, and the like.

Polyhydroxy compounds as described in published U.K. application No. 2,062,654A can also be included in the adhesive composition.

Hydrazine derivatives that may be used in the present invention include, for example, alkylhydroxyphenylalkanoyl hydrazines such as those described in U.S. Patent No. 3,660,438 to Dexter. The compounds disclosed by Dexter have the general formula IV.

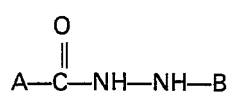

IV

Wherein A represents a group of the general formula V

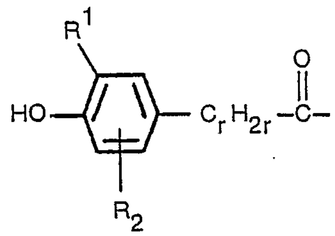

V

Wherein:

r is 0 or an integer of up to 5;

$R_1$ represents an alkyl group having from 1 to 6 carbon atoms; and

$R_2$ represents a hydrogen atom or an alkyl group having from 1 to 6 carbon atoms; and

B represents an alkanoyl group having from 2 to 18 carbon atoms or a group of the formula V as defined above which may be the same as the group A or different therefrom.

Typical hydrazine derivatives of this type are -(3,5-di-t-butyl-4-hydroxy-phenyl)-propionyl-hydrazide, N,N'-bis(-3,5-di-t-butyl-4-hydroxyphenyl)-propionyl-hydrazine, N-stearyl-N'-[-(3,5-di-butyl-4-hydroxyphenyl)-propionyl]-hydrazine, and the like. Particularly preferred is N,N'-bis(3,5-di-t-butyl-4-hydroxy-hydrocinnamoyl)hydrazine.

Other hydrazine derivatives that may be used include the oxalyl hydrazides described in U.S. Patent No. 3,440,210 to Blount et al. These compounds have of the general formula VII.

O=C—NH—N=Q
|
O=C—NH—N=Z

VII

Wherein Q and Z, which may be the same or different, each represents a group of the formula VIII.

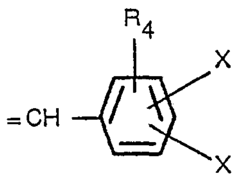

VIII

Wherein

$R_4$ represents a hydrogen atom or an alkyl group; and

X represents a halogen atom;

or one of Q and Z represents a group of the formula VIII as defined above and the other represents a pair of hydrogen atoms.

Typical oxalyl hydrazides of this type are N,N'-dibenzal-(oxalyl dihydrazide) and N-benzal-(oxalayl dihydrazide).

In the practice of this invention, N,N'-dibenzal-(oxalyl dihydrazide) is the preferred oxalyl hydrazide.

Other appropriate hydrazine derivatives are those described in U.S. Patent No. 3,110,696 also to Dexter, the disclosure of which is incorporated herein by reference. These compounds have the formula IX.

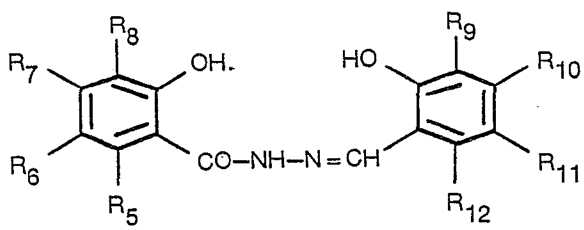

IX

wherein $R_5$, $R_6$, $R_7$, $R_8$, $R_9$, $R_{10}$, $R_{11}$ and $R_{12}$ any two or more of which may be the same or different, each represents a hydrogen atom, or an alkyl, especially lower alkyl, group. The preferred compound of this type is N-salicylidene-N'-salicylhydrazide.

Other hydrazine derivatives of the type herein described are known to those skilled in the art. The hydrazine derivatives can be prepared by known methods, such as those described in the above-mentioned patents. Several of the hydrazine derivatives are commercially available.

The hydrazine derivative improves certain adhesion properties, particularly the resistance to cathodic disbonding, of various adhesives and mastics used with metals in corrosion protection applications. The hydrazine derivative may be used in any amount that will improve the resistance to cathodic disbonding characteristics of the adhesive, the amount usually being in the range of from 0.01% to 30%, preferably from 0.1% to 10% and especially from 0.1% to 5%, by weight based on the total weight of the adhesive composition.

The hydrazine derivative can be blended with the adhesive component to form a homogeneous adhesive composition by conventional methods. Such methods include use of a two roll mill, a Banbury mixer or a Brabender mixer. Temperatures during the mixing or blending procedure should be from about 150° to about 400°F (about 66°C to about 204°), preferably from about 250° to about 350°F (about 121°C to about 177°C).

The following examples illustrate the invention. In these examples, adhesive compositions were prepared containing an adhesive component and a hydrazine derivative. The adhesive compositions were tested for resistance to cathodic disbondment by using the adhesive composition to be tested to bond a heat-shrinkable sleeve of polyethylene to a steel pipe. The polyethylene coated pipe was then tested by the method of ASTM G-42-75 to determine the resistance of the adhesive to cathodic disbondment.

Examples 1—10

Adhesive compositions were prepared by thoroughly mixing the ingredients in a two-mill roll at a mixing temperature of 325—350°F (163°C to 177°C).

An adhesive component was prepaed by blending 25 parts by weight of an ethylene-ethyl acrylate copolymer containing 18% ethyl acrylate, 23 parts by weight of high density polyethylene, 20 parts by weight of medium density polyethylene wax, 5 parts by weight of high density polyethylene wax, 8—13 parts by weight of styrenebutadienestyrene block copolymer rubber, 10 parts by weight of a hydrocarbon tackifier, 3 parts by weight of carbon black and 1 part by weight of polymerized 1,2-dihydro-2,2,4-trimethyl quinoline as an antioxidant. To the adhesive component was added a hydrazine derivative as designated in the following Table in the amount specified for each example. The amount of styrene-butadiene-styrene block copolymer in the composition was varied depending on the amount of hydrazine derivative used so that the total amount of ingredients was 100 parts by weight for each composition.

The adhesive compositions were tested for their resistance to cathodic disbondment by following test procedure. The results are shown in the Table.

The cathodic disbonding resistance of an adhesive can be tested by the test method found in ASTM G-42-75, method A.

The adhesive composition to be tested was pressed into slabs, 6″ × 6″ × 0.025″ (15.24 cm × 15.24 cm × 0.064 cm, in a hot press between two "Teflon", polytetrafluoroethylene, coated plates.

The surface of a steel pipe, 12 inches (30.48 cm) long and 2 inches (5.08 cm) in diameter was grit blasted and degreased with solvent and preheated to 400—425°F (204°C—218°C) with a torch. The sample adhesive slab, trimmed to 6″ × 4″ × 0.025″ (15.24 cm × 10.16 cm × 0.064 cm), was placed on the preheated pipe and a heat-shrinkable sleeve of cross-linked polyethylene was placed over it and heated to shrink the sleeve over the adhesive and pipe. One end of the pipe was then sealed with a heat-shrinkable cap.

A hole (holiday) was drilled through the polyethylene coating and adhesive in the middle of the length of pipe to expose the metal surface of the pipe at that point. The pipe was then immersed in an electrolyte solution comprising water and one weight per cent of each of sodium chloride, sodium sulfate, and sodium carbonate. A potential of −1.5 volts was applied to the pipe thus making the pipe a cathode in the electrolyte solution which also contains a sacrificial anode. The sample and electrolyte solution were maintained at a temperature of 95°C for five days. The pipe was then removed and the area around the holiday inspected to determine the extent of disbondment. The approximate radius of the disbondment area surrounding the holiday was measured in millimeters (mm) and recorded.

TABLE

| Example | Amount (Parts by Weight) | Hydrazine Derivative | Cathodic Disbonding Radius |
|---|---|---|---|
| 1 | 0 | None | Complete Disbonding |
| 2 | 1 | N-Salicylidene-N'-salicylhydrazide | 8 mm |
| 3 | 2 | N-Salicylidene-N'-salicylhydrazide | 14 mm |
| 4 | 5 | N-Salicylidene-N'-salicylhydrazide | 15 mm |
| 5 | 1 | N,N'-bis(3,5-di-t-butyl-4-hydroxycinnamoyl) hydrazine | 13 mm |
| 6 | 2 | N,N'-bis(3,5-di-t-butyl-4-hydroxycinnamoyl) hydrazine | 11 mm |
| 7 | 5 | N,N'-bis(3,5-di-t-butyl-4-hydroxycinnamoyl) hydrazine | 9.5 mm* |
| 8 | 1 | Oxalyl bis(benzylidenehydrazide) | 4 mm |
| 9 | 2 | Oxalyl bis(benzylidenehydrazide) | 6 mm* |
| 10 | 5 | Oxalyl bis(benzylidenehydrazide) | 7 mm* |

* This represents the average disbonding radius for several replications.

The heat-recoverable articles and adhesive compositions of this invention can be used for other purposes besides protection of metal substrates. The presence of the hydrazine derivative in the adhesive compositions may in some cases improve the adhesion properties with various substrates, including metals other than steel and iron, and polymeric substrates such as articles of polyethylene, polypropylene, polyvinyl chloride and the like. In the pipe protection context it has been found that a patch of polymeric sheet material coated with the adhesive composition can be used to repair localized damage to a protective coating on the pipe. The resulting bond between the patch and the covering may be stronger than the bond formed between such materials if an adhesive composition without the hydrazine derivative is used.

**Claims**

1. A dimensionally recoverable article having, on at least part of a surface thereof, an adhesive composition comprising an adhesive component and a sufficient amount of an agent to reduce cathodic disbonding which agent comprises a hydrazine derivative of the general formula I

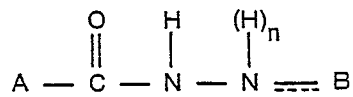 I

Wherein

n is 0 or 1;

A represents a straight-chain or a branched alkyl radical, an aryl, aralkyl, or hydrazido radical or a radical of the general formula II.

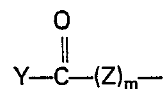 II

in which

m is 0 or an integer of up to 20;

Y represents a straight-chain or branched alkyl group, an aryl or heterocyclic group; and

Z represents a straight-chain or branched alkyl group, an aryl or heterocyclic group;

any of the radicals A being unsubstituted or substituted by one or more lower alkyl or hydroxyl groups or halogen atoms; and

When n is 1, B represents a straight-chain or a branched alkyl radical, an aryl or aralkyl radical or a radical of the general formula II as defined above; and

When n is 0, B represents a radical of the general formula III

$$=CH—(CH_2)_q—W \qquad III$$

wherein q is 0 or an integer of from 1 to 20, and W represents a straight-chain or a branched alkyl group, or an aryl or heterocyclic group, each of which may be unsubstituted or substituted by one or more lower alkyl or hydroxyl groups or halogen atoms.

2. An article as claimed in claim 1, which is dimensionally heat-recoverable.

3. An article as claimed in claim 1 or claim 2 wherein the adhesive component is a hot-melt adhesive.

4. An article as claimed in any one of claims 1 to 3, wherein the hydrazine derivative has the general formula IV.

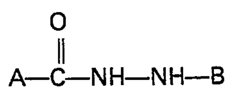 IV

Wherein A represents a group of the general formula V

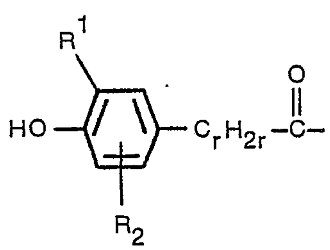 V

Wherein:

r is 0 or an integer of up to 5;

$R_1$ represents an alkyl group having from 1 to 6 carbon atoms; and

$R_2$ represents a hydrogen atom or an alkyl group having from 1 to 6 carbon atoms;

and B represents an alkanoyl group having from 2 to 18 carbon atoms or a group of the formula V as defined above which may be the same as the group A or different therefrom.

5. An article as claimed in any one of claims 1 to 3, wherein the hydrazine derivative has the general formula VII.

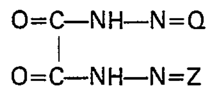

VII

Wherein Q and Z, which may be the same or different, each represents a group of the formula VIII.

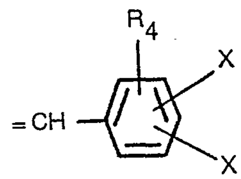

VIII

Wherein

$R_4$ represents a hydrogen atom or an alkyl group; and

X represents a halogen atom;

or one of Q and Z represents a group of the formula VIII as defined above and the other represents a pair of hydrogen atoms.

6. An article as claimed in any one of claims 1 to 3, wherein the hydrazine derivative has the general formula IX

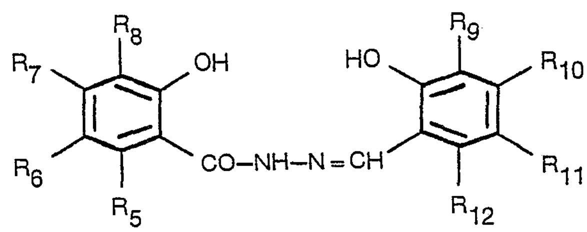

IX

Wherein $R_6$, $R_7$, $R_8$, $R_9$, $R_{10}$, $R_{11}$ and $R_{12}$, any two or more of which may be the same or different, each represents a hydrogen atom or an alkyl group.

7. An article as claimed in claim 1, wherein the hydrazine derivative is N,N'-bis(3,5-di-t-butyl-4-hydroxyhydrocinnamoyl)hydrazine, oxalyl bis (benzylidene hydrazide) or N-salicylidene-N'-salicylhydrazide.

8. A substrate having a polymeric coating bonded to at least part of the surface thereof with an adhesive composition comprising an adhesive component and from 0.01 to 30% by weight, based on the total weight of the adhesive composition of a hydrazine derivative of the general formula I:

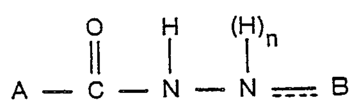

I

Wherein

n is 0 or 1;

A represents a straight-chain or a branched alkyl radical, an aryl, aralkyl, or hydrazido radical or a radical of the general formula II.

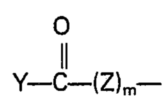

II

in which

m is 0 or an integer of up to 20;

Y represents a straight-chain or a branched alkyl group, an aryl or heterocyclic group; and

Z represents a straight-chain or a branched alkyl group, an aryl or heterocyclic group;

any of the radicals A being unsubstituted or substituted by one or more lower alkyl or hydroxyl groups or halogen atoms; and

When n is 1, B represents a straight-chain or a branched alkyl radical, an aryl or aralkyl radical or a radical of the general formula II as defined above; and

When n is 0, B represents a radical of the general formula III

$$=CH—(CH_2)_q—W \qquad III$$

wherein q is 0 or an integer of from 1 to 20, and W represents a straight-chain or branched alkyl group, or an

aryl or heterocyclic group, each of which may be unsubstituted or substituted by one or more lower alkyl or hydroxyl groups or halogen atoms.

9. A substrate as claimed in claim 8 which is connected to an electric circuit such that it forms the cathode.

10. A method of protecting a metal substrate from corrosion which comprises bonding a protective coating to the substrate with an adhesive composition comprising an adhesive component and an effective amount of an agent for reducing cathodic disbonding which comprises a hydrazine derivative of the general formula I.

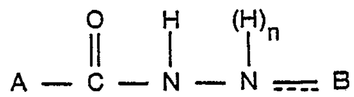

I

Wherein

n is 0 or 1;

A represents a straight-chain or a branched alkyl radical, an aryl, aralkyl, or hydrazido radical or a radical of the general formula II.

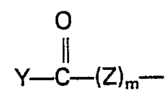

II

in which

m is 0 or an integer of up to 20;

Y represents a straight-chain or a branched alkyl group, an aryl or heterocyclic group; and

Z represents a straight-chain or a branched alkyl group, an aryl or heterocyclic group;

any of the radicals A being unsubstituted or substituted by one or more lower alkyl or hydroxyl groups or halogen atoms; and

When n is 1, B represents a straight-chain or branched alkyl radical, an aryl or aralkyl radical or a radical of the general formula II as defined above; and

When n is 0, B represents a radical of the general formula III

$$=CH—(CH_2)_q—W \qquad \text{III}$$

wherein q is 0 or an integer of from 1 to 20, and W represents a straight-chain or a branched alkyl group, or an aryl or heterocyclic group, each of which may be unsubstituted or substituted by one or more lower alkyl or hydroxyl groups or halogen atoms.

and applying a negative electrical potential to the substrate.

11. The use of a hydrazine derivative of the general formula I

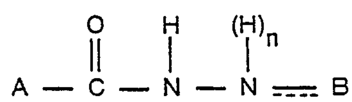

I

wherein

n is 0 or 1;

A represents a straight-chain or a branched alkyl radical, an aryl, aralkyl, or hydrazido radical or a radical of the general formula II.

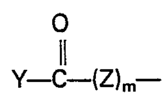

II

in which

m is 0 or an integer of up to 20;

Y represents a straight-chain or branched alkyl group, an aryl or heterocyclic group; and

Z represents a straight-chain or branched alkyl group, an aryl or heterocyclic group;

any of the radicals A being unsubstituted or substituted by one or more lower alkyl or hydroxyl groups or halogen atoms; and

When n is 1, B represents a straight-chain or branched alkyl radical, an aryl or aralkyl radical or a radical of the general formula II as defined above; and

When n is 0, B represents a radical of the general formula III

$$=CH—(CH_2)_q—W \qquad \text{III}$$

wherein q is 0 or an integer of from 1 to 20, and W represents a straight-chain or a branched alkyl group, or an aryl or heterocyclic group, each of which may be unsubstituted or substituted by one or more lower alkyl or hydroxyl groups or halogen atoms.

for preventing or reducing cathodic disbonding of an adhesive from a metal substrate.

**Patentansprüche**

1. In den Abmessungen rückstellbarer Gegenstand, der auf mindestens einem Teil einer seiner Oberflächen eine Klebstoffzusammensetzung hat, die eine Klebstoffkomponente und eine ausreichende Menge eines Mittels zur Verringerung der kathodischen Bindungsauflösung enthält, wobei dieses Mittel ein Hydrazinhydrat der allgemeinen Formel I

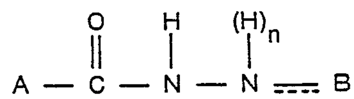 I

umfaßt,
worin
n 0 der 1 ist;
A einen geradkettigen oder verzweigten Alkylrest, einen Aryl-, Aralkyl- oder Hydrazidorest oder einen Rest der allgemeinen Formel II bedeutet,

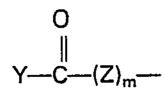 II

worin
m 0 oder eine ganze Zahl von bis zu 20 ist;
Y eine geradkettige oder verzweigte Alkylgruppe, eine Arylgruppe oder heterocyclische Gruppe ist;
Z eine geradkettige oder verzweigte Alkylgruppe, eine Arylgruppe oder heterocyclische Gruppe ist;
wobei jeder der Reste A unsubstituiert oder substituiert ist durch eine oder mehrere niedrig-Alkyl- oder Hydroxylgruppen oder Halogenatome; und
wenn n 1 ist, B ein geradkettiger oder verzweigter Alkylrest, ein Aryl- oder Aralkylrest oder ein Rest der allgemeinen Formel II wie vorstehend definiert ist; und
wenn n 0 ist, B einen Rest der allgemeinen Formel III

$$=CH—(CH_2)_q—W \qquad III$$

darstellt, worin q 0 oder eine ganze Zahl von 1 bis 20 ist, und W eine geradkettige oder verzweigte Alkylgruppe, oder eine Arylgruppe oder heterocyclische Gruppe ist, wobei jede davon unsubstituiert oder substituiert sein kann durch eine oder mehrere niedrig-Alkyl- oder Hydroxylgruppen oder Halogenatome.

2. Gegenstand nach Anspruch 1, der in seinen Abmessungen wärmerückstellbar ist.

3. Gegenstand nach Anspruch 1 oder Anspruch 2 bei dem die Klebstoffkomponente ein Schmelzklebstoff ist.

4. Gegenstand nach einem der Ansprüche 1 bis 3, bei dem das Hydrazinderivat die allgemeine Formel IV hat,

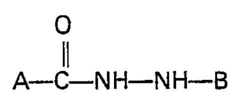 IV

worin A eine Gruppe der allgemeinen Formel V darstellt,

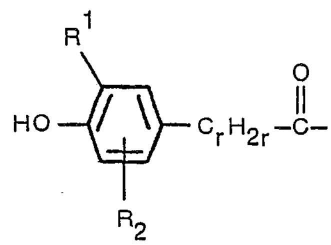 V

worin
r 0 oder eine ganze Zahl von bis zu 5 ist;
$R_1$ eine Alkylgruppe mit 1 bis 6 Kohlenstoffatomen ist; und
$R_2$ ein Wasserstoffatom oder eine Alkylgruppe mit 1 bis 6 Kohlenstoffatomen ist;
und B eine Alkanoylgruppe mit 2 bis 18 Kohlenstoffatomen oder eine Gruppe der Formel V, wie vorstehend definiert, ist, die gleich wie die Gruppe A oder davon verschieden sein kann.

5. Gegenstand nach einem der Ansprüche 1 bis 3, bei dem das Hydrazinderivat die allgemeine Formel VII hat,

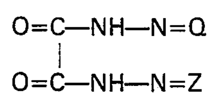 VII

worin Q und Z, die gleich oder verschieden sein können, jeweils eine Gruppe der Formel VIII bedeuten,

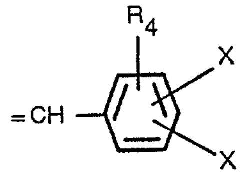

VIII

worin

$R_4$ ein Wasserstoffatom oder eine Alkylgruppe ist; und

X ein Halogenatom darstellt;

oder eines von Q und Z ein Gruppe der Formel VIII, wie vorstehend definiert, darstellt und das andere ein Wasserstoffatompaar darstellt.

6. Gegenstand nach einem der Ansprüche 1 bis 3, worin das Hydrazinderivat die allgemeine Formel IX hat,

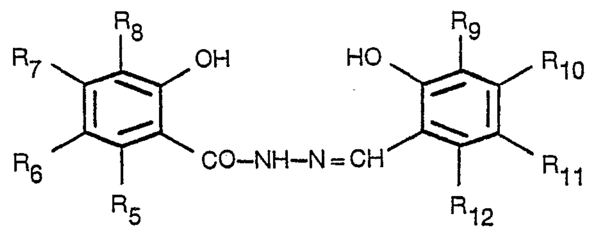

IX

worin $R_6$, $R_7$, $R_8$, $R_9$, $R_{10}$, $R_{11}$ und $R_{12}$, von denen jegliche 2 oder mehrere gleich oder verschieden sein können, jeweils ein Wasserstoffatom oder eine Alkylgruppe bedeuten.

7. Gegenstand nach Anspruch 1, worin das Hydrazinderivat N,N'-Bis(3,5-di-t-butyl-4-hydroxy-hydrocinnamoyl)-hydrazin, Oxalyl-bis(benzylidenhydrazid) oder N-Salicyliden-N'-salicylhydrazid ist.

8. Substrat mit einem polymeren Überzug, der an mindestens einen Teil von dessen Oberfläche mit einer Klebstoffzusammensetzung gebunden ist, die eine Klebstoffkomponente und 0,01 bis 30 Gew.-%, basierend auf dem Gesamtgewicht der Klebstoffzusammensetzung eines Hydrazinderivats der allgemeinen Formel I enthält:

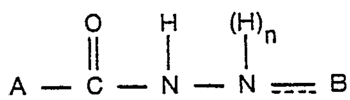

I

worin

n 0 oder 1 ist;

A einen geradkettigen oder verzweigten Alkylrest, einen Aryl-, Aralkyl- oder Hydrazidorest oder einen Rest der allgemeinen Formel II bedeutet,

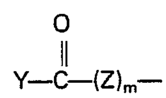

II

worin

m 0 oder eine ganze Zahl von bis zu 20 ist;

Y eine geradkettige oder verzweigte Alkylgruppe, eine Arylgruppe oder heterocyclische Gruppe bedeutet; und

Z eine geradkettige oder verzweigte Alkylgruppe, eine Arylgruppe oder heterocyclische Gruppe darstellt;

wobei jeglicher der Reste A unsubstituiert oder substituiert ist durch eine oder mehrere niedrig-Alkyl- oder Hydroxylgruppen oder Halogenatome; und

wenn n 1 ist, B einen geradkettigen oder verzweigten Alkylrest, einen Aryl- oder Aralkylrest oder einen Rest der allgemeinen Formel II, wie vorstehend definiert, bedeutet; und

wenn n 0 ist, B einen Rest der allgemeinen Formel III bedeutet,

$$=CH—(CH_2)_q—W \qquad III$$

worin q 0 oder eine ganze Zahl von 1 bis 20 ist und W eine geradkettige oder verzweigte Alkylgruppe oder eine Arylgruppe oder heterocyclische Gruppe bedeutet, wovon jede unsubstituiert oder substituiert sein kann durch eine oder mehrere niedrig-Alkyl- oder Hydroxylgruppen oder Halogenatome.

9. Substrat nach Anspruch 8, das mit einer elektrischen Schaltung so verbunden ist, daß es die Kathode bildet.

10. Verfahren zum Schutz eines Metallsubstrats gegen Korrosion durch Binden eines Schutzüberzugs an das Substrat mit einer Klebstoffzusammensetzung, die eine Klebstoffkomponente und eine wirksame Menge eines Mittels zur Verringerung der kathodisch bewirkten Bindungsauflösung enthält, das ein Hydrazinderivat der allgemeinen Formel I umfaßt,

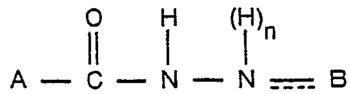 I

worin.

n 0 oder 1 ist;

A ein geradkettiger oder verzweigter Alkylrest, ein Aryl-, Aralkyl- oder Hydrazidorest oder ein Rest der allgemeinen Formel II ist,

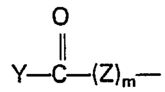 II

worin

m 0 oder eine ganze Zahl von bis zu 20 ist;

Y eine geradkettige oder verzweigte Alkylgruppe, eine Arylgruppe oder heterocyclische Gruppe bedeutet; und

Z eine geradkettige oder verzweigte Alkylgruppe,. eine Aryl- oder heterocyclische Gruppe darstellt;
wobei jeglicher der Reste A unsubstituiert oder substituiert ist durch eine oder mehrere niedrig-Alkyl- oder Hydroxylgruppen oder Halogenatome; und
wenn n 1 ist, B einen geradkettigen oder verzweigten Alkylrest, einen Aryl- oder Aralkylrest oder einen Rest der allgemeinen Formel II, wie vorstehend definiert, darstellt; und
wenn n 0 ist, B einen Rest der allgemeinen Formel III darstellt,

$$=CH—(CH_2)_q—W \qquad III$$

worin q 0 oder eine ganze Zahl von 1 bis 20 ist und W eine geradkettige oder verzweigte Alkylgruppe oder eine Arylgruppe oder heterocyclische Gruppe darstellt, wovon jede unsubstituiert oder substituiert sein kann durch eine oder mehrere niedrig-Alkyl- oder Hydroxylgruppen oder Halogenatome,
und Anlegen eines negativen elektrischen Potentials àn das Substrat.

11. Verwendung eines Hydrazinderivats der allgemeinen Formel I

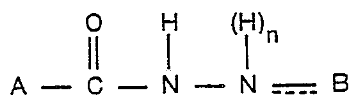 I

worin

n 0 oder 1 ist;

A einen geradkettigen oder verzweigten Alkylrest, einen Aryl-, Aralkyl- oder Hydrazidorest oder einen Rest der allgemeinen Formel II bedeutet,

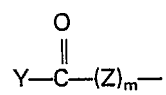 II

worin

m 0 oder eine ganze Zahl von bis zu 20 ist;

Y eine geradkettige oder verzweigte Alkylgruppe, eine Arylgruppe oder heterocyclische Gruppe darstellt; und

Z eine geradkettige oder verzweigte Alkylgruppe, eine Arylgruppe oder, heterocyclische Gruppe bedeutet;
wobei jeglicher der Reste A unsubstituiert oder substituiert ist durch eine oder mehrere niedrig-Alkyl- oder Hydroxylgruppen oder Halogenatome; und
wenn n 1 ist, B einen geradkettigen oder verzweigten Alkylrest, einen Aryl- oder Aralkylrest oder einen Rest der allgemeinen Formel II, wie vorstehend definiert, darstellt und
wenn n 0 ist, B einen Rest der allgemeinen Formel III darstellt,

$$=CH—(CH_2)_q—W \qquad III$$

worin q 0 oder eine ganze Zahl von 1 bis 20 ist und W eine geradkettige oder verzweigte Alkylgruppe oder eine Arylgruppe oder heterocyclische Gruppe bedeutet, wovon jede unsubstituiert oder substituiert sein kann durch eine oder mehrere niedrig-Alkyl- oder Hydroxylgruppen oder Halogenatome,
zur Verhinderung oder Verringerung der kathodischen Bindungsauflösung Klebstoffs von einem Metallsubstrat.

**Revendications**

1. Article apte à reprendre ses dimensions ayant, sur au moins une partie d'une de ses surfaces, une composition adhésive comprenant un composant adhésif et une quantité suffisante d'un agent pour réduire la séparation cathodique, lequel agent comprend un dérivé d'hydrazine de formule générale I

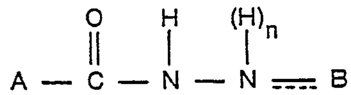

I

où

n vaut 0 ou 1;

A represente un radical alcoyle à chaîne droite ou ramifiée, un radical aryle, aralcoyle ou hydrazido ou un radical de formule générale II

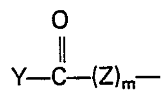

II

où

m vaut 0 ou un nombre entier allant jusqu'à 20;

Y represente un groupe alcoyle à chaîne droite ou ramifiée, un groupe aryle ou hétérocyclique; et

Z représente un groupe alcoyle à chaîne droite ou ramifiée, un groupe aryle ou hétérocyclique;

tout radical A étant non substitué ou substitué par un ou plusieurs groupes alcoyle inférieur ou hydroxyle ou atomes d'halogène; et

lorsque n vaut 1, B représente un radical alcoyle à chaîne droite ou ramifiée, un radical aryle ou aralcoyle ou un radical de formule générale II telle que définie ci-dessus; et

lorsque n vaut 0, B représente un radical de formule générale III

$$=CH—(CH_2)_q—W \qquad III$$

où q vaut 0 ou un nombre entier allant de 1 à 20, et W représente un groupe alcoyle a chaîne droite ou ramifiée, ou un groupe aryle ou hétérocyclique, dont chacun peut être non substitué ou substitué par un ou plusieurs groupes alcoyle inférieur ou hydroxyle ou atomes d'halogène.

2. Article selon la revendication 1, apte à reprendre ses dimensions.

3. Article selon les revendications 1 et 2 où le composant adhésif est un adhésif thermo-fusible.

4. Article selon l'une quelconque des revendications 1 à 3, où le dérivé d'hydrazine est de formule générale IV

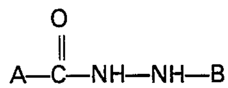

IV

où A représente un groupe de formule générale V

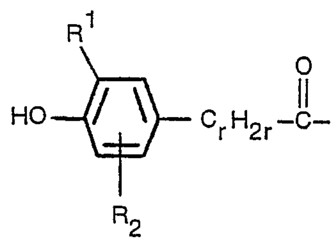

V

où

r vaut 0 ou un nombre entier allant jusqu'à 5;

$R_1$ représente un groupe alcoyle en $C_1$ à $C_6$; et

$R_2$ représente un atome d'hydrogène ou un groupe alcoyle en $C_1$ à $C_6$; et

B représente un groupe alcanoyle en $C_2$ a $C_{18}$ ou un groupe de formule V telle que définie ci-dessus qui peut être semblable au groupe A ou en être différent.

5. Article selon l'une quelconque des revendications 1 à 3, où le dérivé d'hydrazine est de formule générale VII

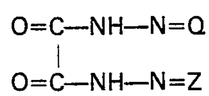

VII

où Q et Z, qui peuvent être semblables où différents, représentent chacun un groupe de formule VIII

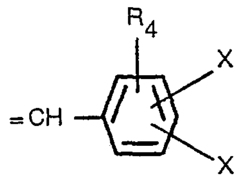

VIII

où

$R_4$ représente un atome d'hydrogène ou un groupe alcoyle; et

X represente un atome d'halogène;

ou l'un des radicaux Q et Z représente un groupe de formule VIII telle que définie ci-dessus et l'autre répresente une paire d'atomes d'hydrogène.

6. Article selon l'une quelconque des revendications 1 à 3, où le dérivé d'hydrazine est de formule générale IX

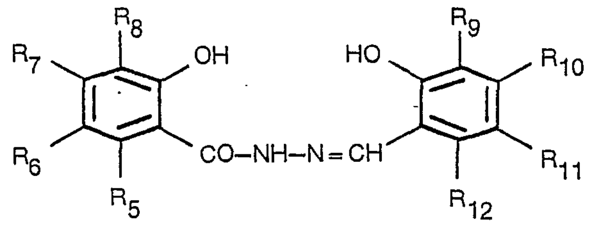

IX

ou $R_6$, $R_7$, $R_8$, $R_9$, $R_{10}$, $R_{11}$ et $R_{12}$, dont deux ou plusieurs peuvent être semblables ou différents, représentent chacun un atome d'hydrogène ou un groupe alcoyle.

7. Article selon la revendication 1, où le dérivé d'hydrazine est la N,N'-bis(3,5-di-t-butyl-4-hydroxy-hydrocinnamoyl)hydrazine, l'oxalyl-bis(benzylidène-hydrazide) ou le N-salicylidène-N'-salicylhydrazide.

8. Substrat ayant un revêtement polymérique lié à au moins une partie de sa surface avec une composition adhésive comprenant un composant adhésif et de 0,01 à 30% en poids, sur la base du poids total de la composition adhésive, d'un dérivé d'hydrazine de formule générale I:

$$A - \overset{\overset{\displaystyle O}{\|}}{C} - \overset{\overset{\displaystyle H}{|}}{N} - \overset{\overset{\displaystyle (H)_n}{|}}{N} \overset{----}{=\!=} B \qquad I$$

où

n vaut 0 ou 1;

A représente un radical alcoyle à chaîne droite ou ramifiée, un radical aryle, aralcoyle ou hydrazido ou un radical de formule générale II

$$Y - \overset{\overset{\displaystyle O}{\|}}{C} - (Z)_m - \qquad II$$

où

m vaut 0 ou un nombre entier allant jusqu'à 20;

Y représente un groupe alcoyle à chaîne droite ou ramifiée, un groupe aryle ou hétérocyclique; et

Z représente un groupe alcoyle à chaîne droite ou ramifiée, un groupe aryle ou hétérocyclique;

tout radical A etant non substitué ou substitué par un ou plusieurs groupes alcoyle inférieur ou hydroxyle ou des atomes d'halogène; et

lorsque n vaut 1, B représente un radical alcoyle à chaîne droite ou ramifiée, un radical aryle ou aralcoyle ou un radical de formule générale II telle que définie ci-dessus; et

lorsque n vaut 0, B représente un radical de formule générale III

$$=CH-(CH_2)_q-W$$

où q vaut 0 ou un nombre entier allant de 1 à 20, et W représente un groupe alcoyle à chaîne droite ou ramifiée, ou un groupe aryle ou hétérocyclique, dont chacun peut être non substitué ou substitué par un ou plusieurs groupes alcoyle inférieur ou hydroxyle ou des atomes d'halogène.

9. Substrat selon la revendication 8 qui est relié à un circuit électrique de manière telle qu'il forme la cathode.

10. Procédé de protection d'un substrat métallique contre la corrosion dans lequel on lié un revêtement protecteur au substrat avec une composition adhésive comprenant un composant adhésif et une quantité

efficace d'un agent pour réduire la separation cathodique qui comprend un dérivé d'hydrazine de formule générale I

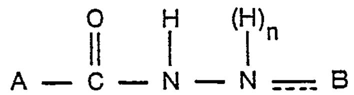 I

où

n vaut 0 ou 1;

A représente un radical alcoyle à chaîne droite ou ramifiée, un radical aryle, aralcoyle ou hydrazido ou un radical de formule générale II

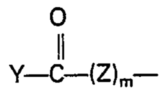 II

où

m vaut 0 ou un nombre entier allant jusqu'à 20;

Y représente un groupe alcoyle à chaîne droite ou ramifiée, un groupe aryle ou hétérocyclique; et

Z représente un groupe alcoyle à chaîne droite ou ramifiée, un groupe aryle ou hétérocyclique;

tout radical A étant non substitué ou substitué par un ou plusieurs groupes alcoyle inférieur ou hydroxyle ou atomes d'halogène; et

lorsque n vaut 1, B représente un radical alcoyle à chaîne droite ou ramifiée, un radical aryle ou aralcoyle ou un radical de formule générale II telle que définie ci-dessus; et

lorsque n vaut 0, B représente un radical de formule générale III

$$=CH-(CH_2)_q-W \qquad III$$

où q vaut 0 ou un nombre entier allant de 1 à 20, et W représente un groupe alcoyle à chaîne droite ou ramifiée, ou un groupe aryle ou hétérocyclique, dont chacun peut être non substitué ou substitué par un ou plusieurs groupes alcoyle inférieur ou hydroxyle ou atomes d'halogène,

et on applique un potentiel électrique négatif au substrat.

11. Application d'un dérivé d'hydrazine de formule générale I

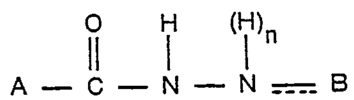 I

où

n vaut 0 ou 1;

A représente un radical alcoyle à chaîne droite ou ramifiée, un radical aryle, aralcoyle ou hydrazido ou un radical de formule générale II

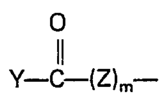 II

où

m vaut 0 ou un nombre entier allant jusqu'à 20;

Y représente un groupe alcoyle à chaîne droite ou ramifiée, un groupe aryle ou hétérocyclique; et

Z représente un groupe alcoyle à chaîne droite ou ramifiée, un groupe aryle ou hétérocyclique;

tout radical A étant non substitué ou substitué par un ou plusieurs groupes alcoyle inférieur ou hydroxyle ou atomes d'halogene; et

lorsque n vaut 1, B représente un radical alcoyle à chaîne droite ou ramifiée, un radical aryle ou aralcoyle ou un radical de formule générale II telle que définie ci-dessus; et

lorsque n vaut 0, B représente un radical de formule générale III

$$=CH-(CH_2)_q-W \qquad III$$

où q vaut 0 ou un nombre entier allant de 1 à 20, et W représente un groupe alcoyle à chaîne droite ou ramifiée, ou un groupe aryle ou hétérocyclique, dont chacun peut être non substitué ou substitué par un ou plusieurs groupes alcoyle inférieur ou hydroxyle ou atomes d'halogène,

pour prévenir ou reduire la séparation cathodique entre un adhésif et un substrat métallique.